# FASCICULE DE BREVET EUROPEEN

(11) **EP 0 395 468 B1**
(45) Date de publication et mention de la délivrance du brevet: **28.09.1994**
(21) Numéro de dépôt: 90400965.1
(22) Date de dépôt: 10.04.1990
(51) Int. Cl.: E02B 15/04, B05C 19/00

(54) **Procédé d'élimination de polluants pétroliers et produit à cet éffet.**
Verfahren zur Beseitigung von Ölverunreinigungen und Werkstoff dafür
Method for removing oil pollutants and product for this purpose

(30) Priorité: 24.04.1989 FR 8905390
(43) Date de publication de la demande: 31.10.1990
(73) Titulaire: ISOVER SAINT-GOBAIN, F-92400 Courbevoie (FR)
(72) Inventeur: Conche, Michel, F-60870 Villers Saint Paul (FR); Fages, Jean-Louis, F-92100 Boulogne (FR)
(74) Mandataire: Le Vaguerèse, Sylvain Jacques

(56) Documents cités:
- FR-A- 2 457 345
- FR-A- 2 553 392
- FR-A- 2 557 817
- GB-A- 1 235 463
- US-A- 3 888 766

## Description

L'invention est relative à un procédé de dépollution de produits pétroliers répandus sur de l'eau, mers, lacs, rivières, etc... et à un produit pour sa mise en oeuvre.

La pollution de l'eau par des nappes de pétrole pose des problèmes mal résolus qu'il s'agisse de pollution de grande envergure comme à la suite de naufrages, de transporteurs, d'opérations de "dégazage sauvage" de ces mêmes transporteurs ou de pollutions plus localisées notamment sur les cours d'eau.

Parmi les techniques connues, certaines font intervenir des agents chimiques qui ont pour effet de disperser ou dissoudre le pétrole traité. Il s'agit, dans ce cas, de minimiser les conséquences dommageables de la présence du pétrole sans pour autant éliminer celui-ci.

Dans d'autres techniques, on s'efforce de retirer le pétrole répandu. Dans ce sens, divers matériaux absorbants ont été proposés pour conduire cette opération. Le matériau en question est répandu à la surface de l'eau polluée. Il se charge de pétrole et l'on récupère le matériau absorbant pour le détruire ensuite ou au moins le stocker dans des sites où il ne constitue pas une gêne trop importante.

Pour se prêter convenablement à l'opération d'absorption du pétrole, le matériau choisi doit présenter les qualités suivantes :
. avoir une bonne affinité pour les pétroles usuellement rencontrés dans ce type de pollution,
. être très peu hydrophile pour ne pas se charger d'eau au détriment notamment de l'absorption recherchée.

Indépendamment de ces qualités intrinsèques concernant directement la capacité à une séparation pétrole/eau, le produit doit encore satisfaire à d'autres conditions. Parmi celles-ci, il est impératif que le matériau utilisé puisse facilement être récupéré et, par conséquent, qu'il flotte à la surface de l'eau. Il est encore nécessaire que ce matériau puisse être maintenu sous un faible volume et, si possible, un faible poids aussi bien pour faciliter l'acheminement sur les lieux d'utilisation que pour minimiser les coûts de stockage. Enfin, il est indispensable de choisir un matériau dont le coût soit le plus faible possible. Cette dernière condition conduit à écarter une grande quantité de matériaux synthétiques du genre mousse de polyuréthane ou granulés de polystryrène expansé ou encore des non-tissés de fibres en polypropylène ou analogues.

Précédemment, il a été également proposé d'utiliser des matériaux du type laine minérale. Le brevet US 4 006 079 décrit ainsi l'utilisation de feutres de laine de verre renforcés par une armature qui en assure la cohésion. Les feutres sont conditionnés sous forme de rouleaux. Ces rouleaux sont étendus à la surface de la nappe de pétrole à absorber. Ils sont ensuite ramenés, toujours sous forme de bande, après imprégnation par le pétrole. L'utilisation de ce type de produit est enfermée dans des conditions très particulières peu commodes à mettre en oeuvre. En outre, le renforcement du feutre à l'aide d'une armature complique sensiblement le conditionnement et ajoute au prix de ce produit.

L'utilisation de laine minérale pour l'absorption de pétrole ou de produits pétroliers a encore été envisagée dans le brevet GB 1 235 463 ainsi que dans le brevet FR 2 457 345 cf. préambule de la revendication 1 annexée. Ces deux documents considèrent l'utilisation de laine minérale sous différentes formes et notamment sous forme de granulés de dimensions limitées.

Si l'intérêt des feutres de fibres minérales pour l'absorption des produits pétroliers répandus sur l'eau est bien reconnu, notamment en raison des coûts relativement modérés des produits utilisés, on sait aussi que ce type de produit présente au moins un inconvénient. En effet, bien que la masse de pétrole récupérée rapportée à la masse de fibres utilisées est relativement importante, le volume des fibres rapporté à leur masse est très élevé. Autrement dit, le volume du produit que l'on doit stocker et transporter est très conséquent.

Pour limiter cet inconvénient, il est dit que les feutres utilisés peuvent être comprimés. Avec les feutres usuels, tels que ceux décrits dans ces documents antérieurs, il apparaît cependant que le taux de compression reste limité. Avec les feutres minéraux dont il est question dans les deux derniers documents, le taux de compression ne dépasse pas ordinairement 4 ou 5. On se trouve donc encore en présence de produits à faible masse volumique et donc relativement encombrants compte tenu de leur capacité d'absorption.

Le but de l'invention est de fournir un produit d'absorption des produits pétroliers à base de laine minérale dont les caractéristiques de stockage soient améliorées et qui, par ailleurs, présente une capacité d'absorption accrue, notamment vis-à-vis du volume du produit dans son conditionnement le moins encombrant.

L'invention a également pour but un procédé permettant de conférer audit produit les meilleures propriétés possibles.

A cet effet l'invention a pour objet un procédé selon la revendication 1 annexeé et un produit pour la mise en oeuvre de ce procédé selon la revendication 5 annexeé.

Ces buts ont ainsi été atteints en utilisant des laines minérales (laine de verre ou laine de roche) dans des conditions qui s'apparentent aux techniques désignées communément par "laine soufflée" dans le domaine de l'isolation thermique. Selon ces techniques, les fibres minérales qui sont conditionnées sous une forme très comprimée permettant de dépasser 100 ou même 200 kg/m³ pour une densité avant compression inférieure à 30 kg/m³ ou même inférieure à 15 kg/m³, au moment de leur utilisation sont soumises à un démottage et à un transport pneumatique suffisamment intense pour leur permettre de reprendre un volume proche de leur volume initial.

Dans les techniques de "laine soufflée" pour l'isolation la laine minérale, ordinairement de la laine de verre mais il peut s'agir également de laine de roche, est comprimée à partir d'une masse de fibres de faible masse volumique sous forme d'amas de dimensions variables. Ces amas sont détachés par des moyens mécaniques de la bande de feutre provenant directement de la fabrication. Dans la forme la plus usuelle, les amas de fibres sont détachés au moyen d'un dispositif de type cardeuse. Les dimensions des amas peuvent varier considérablement. Pour des raisons pratiques, on limite ordinairement la division du feutre à des amas de dimensions de l'ordre d'une dizaine de centimètres et qui ne dépasse pas 20 cm. Ces dimensions s'avèrent à l'usage suffisamment petites pour ne pas contrarier le conditionnement homogène du produit et, par ailleurs, permettent lors du déconditionnement par les moyens pneumatiques assurant l'épandage des fibres, la division sous forme de mèches ou flocons de dimensions sensiblement plus petites. Il semble, dans les conditions d'utilisation en question, que l'on retrouve pratiquement les mèches ou flocons individuels qui sont rassemblés au moment de la constitution du feutre d'origine immédiatement après la production des fibres à partir du matériau verrier en fusion. Quoiqu'il en soit, dans ces techniques, on constate que les produits soufflés convenablement divisés présentent des dimensions inférieures à 5 cm et, le plus souvent, inférieures à 3 cm.

Si les laines minérales soufflées traditionnellement utilisées pour l'isolation permettent d'atteindre de bons résultats dans l'application envisagée selon l'invention, de façon préférée, on utilise cependant des feutres prédécoupés dans des conditions qui seront décrites plus loin. Les feutres de fibres, avant leur compression pour stockage, sont découpés en particules de dimensions inférieures à 4 cm et, de préférence, inférieures à 3 cm. Par ce prédécoupage à des dimensions déterminées, on fixe également les dimensions du produit qui sera ultérieurement dispersé pour absorber les produits pétroliers. Le prédécoupage des particules permet d'utiliser pleinement les effets du déconditionnement et du transport pneumatique pour redonner aux fibres leur masse volumique d'origine. En d'autres termes, le prédécoupage des particules de feutre permet d'obtenir un produit plus homogène et globalement de masse volumique plus faible. Cette prédécoupe permet encore une meilleure dissociation des particules les unes d'avec les autres et donc un meilleur contact avec les produits pétroliers répandus sur l'eau. Sous cette forme on obtient, comme nous le verrons dans les exemples, une meilleure "captation" des produits pétroliers dispersés.

Le mode de dissociation et d'épandage des matériaux comprend à partir de masses compactées pour le stockage et le transport, après éventuellement un démottage mécanique qui peut être rudimentaire, voire effectué manuellement, à mettre les amas de fibres en suspension dans un courant gazeux suffisamment intense pour que celles-ci ne se déposent pas dans les canalisations qui les conduisent jusqu'à la lance de projection et leur permettre de reprendre leur masse volumique d'origine.

Pour assurer ce transport au cours duquel les particules fibreuses finissent de se dissocier et reprennent pour l'essentiel leur volume initial, le courant gazeux est animé d'une vitesse qui, de préférence, n'est pas inférieure à 15 m/s et, de préférence, supérieure à 20 m/s.

Le débit de fibres dans le courant gazeux ne doit pas être trop important faute de quoi une bonne dispersion ne peut être obtenue ni un bon foisonnement des particules. Par ailleurs il est préférable, pour des raisons évidentes de rendement, d'assurer un débit de fibres suffisant. La masse de gaz par rapport à celle des fibres se situe avantageusement au dessus de 1,3 et, de préférence, supérieure à 3. Même pour les produits présentant les masses volumiques les plus faibles, un rapport supérieur à 10 n'apporterait pas d'avantage supplémentaire.

Le mode de mise en suspension des fibres dans le courant gazeux peut prendre des formes variées. Des techniques et matériels pour ce type de mise en oeuvre ont été décrits notamment dans les demandes de brevets FR 2 553 392 et FR 2 557 817.

L'utilisation des fibres pour l'absorption des produits pétroliers dans les conditions qui viennent d'être indiquées donne les meilleurs résultats quand ces conditions sont combinées avec un choix approprié des feutres utilisés. Dans ce choix, il convient de considérer la qualité des fibres elles-mêmes mais aussi la nature et surtout la quantité d'agent liant utilisé pour fixer les fibres les unes aux autres. L'adjonction de produits favorisant l'hydrophobie et l'oléophilie est, par ailleurs, un facteur qui peut encore améliorer l'efficacité des produits considérés.

Dans les applications des fibres minérales (verre ou roche) à l'absorption des produits pétroliers décrites antérieurement, l'idée que la capacité d'absorption est liée à la finesse des fibres a été énoncée. Il ne semble pas cependant que les produits proposés soient parmi ceux constitués des fibres les plus fines que l'on sache produire.

La demande de brevet FR 2 457 345, par exemple, propose des feutres constitués de fibres de 3 à 20 micromètres avec des masses volumiques de 40 à 120 kg/m³ et, de préférence, de 70 à 110 kg/m³. Compte tenu de ces masses volumiques, on peut estimer que la valeur moyenne du diamètre des fibres dépasse 6 micromètres et que l'homogénéité des fibres est peu poussée. Le choix de ce type de feutre, bien qu'il ne soit pas explicité, est vraisemblablement lié au souci de maintenir une certaine résistance mécanique à l'écrasement et, par suite, à la rétention des produits absorbés.

Selon l'invention, on utilise avantageusement des produits dont les fibres sont de diamètres plus petits. Cette plus grande finesse des fibres n'est cependant pas préjudiciable à la tenue mécanique lorsque les fibres sont suffisamment homogènes. Ce type de fibres, initialement produit pour constituer des isolants thermiques, a été proposé précédemment dans des applications mettant à profit leur caractère hydrophile (voir demande de brevet FR 2 574 820) notamment pour la confection de produits à usage sanitaire et hygiénique. L'application à l'absorption de produits pétroliers répandus sur l'eau requiert, au contraire, une très forte hydrophobie. Il est remarquable de constater que la même structure de fibres puisse être adaptée à ces autres caractéristiques sans modifier leur mode de production, ceci en changeant d'autres caractéristiques notamment concernant le liant.

Les fibres avantageusement utilisées ont un diamètre moyen tel que leur surface spécifique est d'au moins 0,25 m²/g et, de préférence, de plus de 0,5 m²/g. De façon typique, ces surfaces spécifiques correspondent à des fibres dont le diamètre moyen est inférieur à 5 micromètres et, éventuellement, inférieur à 2,5 micromètres, allant jusqu'à moins de 1 micromètre.

Les meilleurs produits fibreux ne comportent pas d'infibrés, c'est-à-dire de particules dont les dimensions se situent, par exemple, à plus de 20 micromètres. C'est le cas des fibres obtenues dans les techniques de centrifugation et étirage gazeux utilisées pour la production de fibres de verre, le verre passant par un centrifugeur formant filière.

Dans les techniques de centrifugation sur des rouleaux, principalement utilisées pour produire les laines de roche, une certaine proportion d'infibrés est inévitable. Cela ne veut pas dire que ces feutres soient inutilisables, mais que le rapport masse de produit pétrolier/masse de fibres est moins satisfaisant en raison de l'accroissement de masse occasionné par la présence de ces infibrés. Cet accroissement de masse ne s'accompagne par ailleurs d'aucune amélioration de la rétention des produits pétroliers. L'intérêt de ces produits laine de roche vis-à-vis des laines de verre est dans leur coût de production sensiblement plus faible pour une même masse. A l'heure actuelle, les différences de coût sont pratiquement compensées par celles concernant les masses volumiques de ces produits. Aussi le choix entre eux s'effectue sur d'autres critères. Dans la suite de la description, il est fait référence essentiellement aux feutres de fibres de verre.

L'homogénéité des produits fibreux préférés est telle que les fibres ont un diamètre qui est compris à plus de 95 % entre 0,5 et 2 fois le diamètre moyen.

Les fibres relativement longues sont également préférées. Les fibres préparées ordinairement par les techniques qui seront indiquées plus loin, présentent une longueur de plusieurs centimètres. Ceci avec une distribution suffisamment isotrope, est un élément important de leur reprise d'épaisseur au déconditionnement d'autant plus que l'on part de fibres de masse volumique plus faible.

Les feutres constitués des fibres les plus avantageuses qui viennent d'être décrites, présentent des masses volumiques qui peuvent être très faibles. Selon l'invention, on utilise avantageusement des feutres qui initialement ont une masse volumique inférieure à 50 kg/m³ et, de préférence, inférieure à 30 kg/m³ et peut descendre en dessous de 10 kg/m³.

On voit que ces feutres subissent pour leur conditionnement des compressions très importantes, compte tenu des valeurs indiquées précédemment de 200 kg/m³ ou plus dans cet état comprimé. On comprend l'importance de la qualité des fibres pour leur reprise d'épaisseur après cette compression.

Dans l'opération de reprise d'épaisseur, la qualité des fibres est complétée aussi par le taux de liant qu'elles renferment. L'effet "ressort" des fibres dépend pour une part des liaisons que les fibres établissent entre elles par l'intermédiaire du liant. Il est nécessaire, pour avoir cet effet ressort, que soit constitué un "maillage" du réseau de fibres.

Traditionnellement dans les utilisations isolation, le liant est constitué de préférence par une résine hydrophobe de type formo-phénolique qui est introduite à raison de 2 à 6 % en poids de fibres. Le taux étant généralement d'autant plus faible que les fibres sont plus grosses.

Dans le cadre de l'invention la teneur en liant, en plus du rôle dans le mécanisme de reprise d'épaisseur, intervient aussi dans le caractère hydrophobe. Bien que les teneurs usuelles pour les produits d'isolation indiquées ci-dessus soient utilisables, on préfère généralement accentuer le caractère hydrophobe par un taux de liant légèrement accru. Ainsi le taux de résine formo-phénolique est avantageusement supérieur dans tous les cas à 5 % de la masse des fibres et, pour les produits les plus fins, cette teneur peut s'élever à 15 % et plus. Le plus usuellement, la teneur en liant est de 8 à 12 %.

En plus du liant hydrophobe, ou en partie à la place de celui-ci, notamment si l'on préfère limiter le taux de liant, on introduit avantageusement dans le feutre un agent ayant une bonne affinité à la fois pour la fibre et présentant un caractère hydrophobe prononcé. Limiter le taux de liant peut être avantageux en particulier pour les produits ayant la plus forte masse volumique. Une trop forte teneur en liant peut conduire à une certaine rigidité des feutres et s'oppose alors à leur capacité à subir de façon réversible des taux de compression élevés. Des agents hydrophobes bien adaptés sont, par exemple, ceux dénommés "silicones". Le taux de ces agents qui sont introduits dans les feutres n'est jamais très élevé. Une teneur de l'ordre de 0,5 à 3 % de la masse des fibres est préférée. Une teneur plus élevée renchérit le produit sans améliorer ses propriétés.

Parmi les silicones, on préfère ceux qui sont émulsifiables dans l'eau. De cette façon, leur mise en oeuvre est bien compatible avec les conditions de production des feutres de fibres. Les huiles de silicone utilisées présentent aussi l'avantage d'être légèrement réticulantes dans les conditions qui sont celles de fixation des liants.

Pour faciliter l'affinité pour les fibres de verre, on choisit de préférence une huile de silicone comportant des groupements silanols.

Un avantage de ces huiles de silicone est qu'elles peuvent être introduites avec le liant et ne nécessitent par conséquent aucune opération supplémentaire au cours de la fabrication du feutre.

L'invention est décrite de façon plus détaillée dans ce qui suit, en se reportant à des exemples de mise en oeuvre.

Les feutres utilisés pour les essais sont produits en suivant les modalités décrites dans la demande de brevet européen publiée sous le numéro 0 091 381.

Dans ce mode de production, du verre fondu provenant d'un four de fusion s'écoule dans un dispositif de centrifugation.

Avantageusement, la composition de verre utilisée correspond à celle définie dans la demande de brevet européen précitée, à savoir en proportion pondérale :

| | | | |
|---|---|---|---|
| SiO₂ | 61 - 66 | Na₂O | 12,55 - 16,5 |
| Al₂O₃ | 2,5 - 5 | K₂O | 0 - 3 |
| CaO | 6 - 9 | B₂O₃ | 0 - 7,5 |
| MgO | 0 - 5 | Fe₂O₃ | moins de 0,6 |

Le verre fondu est conduit à une température de l'ordre de 1500°C, sous forme d'une coulée continue, dans un organe distributeur disposé à l'intérieur de l'organe centrifugeur formant les fibres. Le verre divisé en gros filets (3 à 4 mm de diamètre) est projeté sur la paroi périphérique interne du centrifugeur.

Le centrifugeur présente un nombre élevé d'orifices par lesquels le verre s'échappe sous l'effet de la force centrifuge. Les orifices sont de faibles dimensions, de l'ordre de 1 mm de diamètre.

Les conditions d'alimentation, notamment température et débit du verre, température du centrifugeur, sont réglées de façon à maintenir un écoulement continu du matériau à partir des orifices de centrifugation.

Les fins filaments projetés à partir des orifices de la paroi du centrifugeur pénètrent dans un courant gazeux chaud à vitesse élevée, établi de façon à longer la paroi du centrifugeur suivant une direction voisine de l'axe de celui-ci.

Les filaments sont entraînés et étirés par ces gaz chauds provenant traditionnellement d'un brûleur à combustion interne.

Les fibres formées se figent au contact avec l'air ambiant. Elles sont récupérées sur un convoyeur perméable aux gaz. Sur ce convoyeur elles se déposent sous forme d'un feutre à faible masse volumique dont l'épaisseur est fonction du débit du dispositif de formation des fibres, de la largeur du convoyeur et de la vitesse de défilement de celui-ci. Eventuellement, les conditions peuvent être réglées de façon que le feutre recueilli puisse être utilisé directement pour former la nappe de matériau absorbant mise en oeuvre dans la présente invention après découpe aux dimensions adéquates.

La composition de liant est projetée de façon traditionnelle sur le trajet des fibres entre le centrifugeur et le convoyeur de réception. La composition est finement pulvérisée pour assurer une enduction des fibres bien homogène. L'agent hydrophobe est introduit dans la composition de liant.

Dans les exemples de produits présentés ci-après, le taux d'huile de silicone est réglé à 1 % en poids du feutre. Le taux de liant sec est de 6 %.

Deux sortes de feutres sont préparées par cette technique.

Le premier feutre correspond à la production traditionnelle de laine isolation soufflée. Le feutre recueilli sous une épaisseur de l'ordre de 150 mm est passé à l'étuve pour "fixer" le liant. Il est ensuite divisé en amas de dimensions de l'ordre de 150 mm. Ces amas sont rassemblés et comprimés dans un emballage plastique. La masse volumique initiale est dans les deux cas envisagés par la suite de 20 et 30 kg/m³. Elle est portée dans le conditionnement à environ 200 kg/m³.

Le second feutre est recueilli sous une épaisseur de l'ordre de 3 cm et présente une masse volumique avant compression de l'ordre de 20 kg/m³. Après passage à l'étuve, la bande de feutre est découpée en lanières longitudinales de 1,5 cm de large. Ces lanières sont massicotées, découpant des morceaux de 1,5 x 1,5 cm. Ces morceaux sont conditionnés comme précédemment à 200 kg/m³.

Les premiers essais sont effectués en laboratoire sur la laine de verre en amas de masse volumique 30 kg/m³. Dans ces essais, on détermine la capacité maximum de rétention du produit. L'opération est conduite de la façon suivante.

La cellule de contact entre l'hydrocarbure et le matériau est constituée par une virole cylindrique en verre, de 10 cm de diamètre et 10 cm de hauteur, munie à l'ouverture inférieure d'un filet à mailles de 6 mm nouées, fixé sur la paroi latérale.

La virole avec filet est posée sur un tamis métallique de mailles de 1 mm au fond d'un bac de 30 cm de diamètre rempli d'eau jusqu'à mi-hauteur de la virole.

24 g d'hydrocarbures sont déversés sur la surface de l'eau, à l'intérieur de la virole, constituant une couche de l'ordre de 3 mm d'épaisseur.

Un poids connu d'absorbant, correspondant à un rapport r huile/absorbant déterminé, est réparti sur la couche d'hydrocarbures.

L'ensemble du système est alors soumis, pendant une heure, à un mouvement de va-et-vient horizontal à 50 cycles par minute et de 3,5 cm d'amplitude.

On sort la virole de l'eau en soulevant le maillage métallique puis on dépose l'ensemble au-dessus d'un cristallisoir. La virole est alors lentement soulevée à quelques centimètres au-dessus du tamis et l'absorbant est ainsi laissé pour égouttage pendant 30 mn au travers du filet.

Les hydrocarbures qui se sont éventuellement écoulés au travers du filet sont extraits à l'aide d'un solvant puis dosés par spectrocolorimétrie.

On détermine par différence les poids d'hydrocarbures retenus sur le filet, d'où la capacité de rétention Cr correspondant au rapport poids d'hydrocarbures retenu/poids d'absorbant sec initial.

On répète l'essai avec des valeurs de r croissantes, jusqu'à obtenir une fuite d'hydrocarbures à l'égouttage.

La valeur de correspondant à l'apparition de la fuite est égale à la capacité maxi de rétention Cm.

L'hydrocarbure utilisé dans ces essais est de qualité "Brut Arabian Light" étête à 110°C. Il présente une densité de 0,88 et une viscosité de 43 cPo Brookfield à 20°C.

Le tableau suivant fait apparaître les différents poids de produits fibreux utilisés, le poids d'hydrocarbures retenus, le rapport poids d'hydrocarbures/poids d'absorbant r et la capacité maximale de rétention Cr.

| Poids initial d'hydrocarbures (grammes) | Poids initial d'absorbant (grammes) | Poids retenus (grammes) | r | Cr |
|---|---|---|---|---|
| 24,00 | 1,20 | 24,00 | 20,00 | 20,00 |
| 24,00 | 1,10 | 23,65 | 21,82 | 21,50 |
| 24,00 | 1,00 | 22,36 | 24,00 | 22,36 |
| 24,00 | 0,90 | 22,74 | 26,67 | 25,27 |
| 24,00 | 0,80 | 22,90 | 30,00 | 28,63 |
| 24,00 | 0,70 | 19,76 | 34,29 | 28,23 |

Dans les essais reportés, la capacité maximale de rétention s'établit à 28,6 g d'hydrocarbures pour 1 gramme de produits fibreux, et 97 % du volume apparent sont imprégnés.

Il faut en plus signaler que les produits selon l'invention sont parfaitement hydrophobes. Soumis au test "Boeing Material Specification 8-48", dit test "BMS" pour l'isolation, ils montrent une rétention d'humidité inférieure à 2 % en poids du feutre. Le taux d'humidité retenue après contact avec l'eau est en fait très inférieur à 1 % et peut être considéré comme négligeable.

Des essais en mer ont été conduits sur les produits en amas et sur les produits découpés.

Une nappe de fuel léger de 200 litres est répandue sur la mer. Le fuel léger présente une viscosité de 50 cSt à 20°C.

La projection des produits est effectuée avec une machine de soufflage débitant les fibres à raison de 1 kg/m³ d'air et avec une vitesse de projection de 30 m/s. Les produits fibreux préalablement démottés en morceaux d'environ 170 mm foisonnent bien. La masse volumique apparente se situe à environ 20 kg/m³.

Les mèches projetées s'individualisent relativement bien. Elles présentent des dimensions de l'ordre ou inférieures à 50 mm.

La récupération du produit imprégné est faite au moyen d'un chalut fixé à l'extrémité d'un bras de levage. Le chalut est constitué d'un grand entonnoir muni de poches interchangeables. Ces poches présentent, de façon usuelle, des mailles en forme de losanges ayant des dimensions de 5 mm de côte. Les particules qui flottent toutes sont facilement recueillies. Il faut remarquer à ce sujet que leur couleur jaune clair permet de les repérer relativement facilement.

Le taux d'imprégnation, bien que plus faible qu'en laboratoire, reste très satisfaisant (de l'ordre de 20 g de fuel par gramme de fibre).

Le même essai, effectué avec les particules de feutre prédécoupées, montre une amélioration importante de la rétention. Celle-ci s'élève à environ 40 à 50 g de fuel par gramme de fibre.

## Revendications

1. Procédé de dépollution de produits pétroliers répandus à la surface de l'eau au moyen de particules de feutres de fibres minérales hydrophobes dispersées à la surface de l'eau à traiter par transport pneumatique, caractérisé en ce que les feutres dissociés en amas dont les dimensions ne sont pas supérieures à 20 cm sont comprimés pour leur stockage et transport et, lors de leur utilisation, après un démottage séparant les amas, sont soumis à un transport pneumatique suffisamment intense pour dissocier les amas en mèches dont les dimensions ne dépassent pas environ 5 cm, et leur permettre de reprendre leur masse volumique d'origine.

2. Procédé selon la revendication 1, dans lequel le feutre utilisé est, avant sa compression, découpé en particules ne dépassant pas 4 cm.

3. Procédé selon l'une des revendications précédentes, caractérisé en ce que le transport pneumatique est effectué avec un courant gazeux de vitesse supérieure à 15 m/s.

4. Procédé selon l'une des revendications précédentes, caractérisé en ce que la masse de gaz de transport rapportée à celle des fibres transportées est au moins égale à 1,3.

5. Produit à base de feutres de fibres minérales hydrophobes pour la mise en oeuvre du procédé selon la revendication 1, caractérisé en ce qu'il est constitué par des feutres découpés en particules ne dépassant pas 4 cm et comprimés après découpage de façon à augmenter de façon substantielle sa masse volumique.

6. Produit selon la revendication la revendication 5, dans lequel les fibres sont liées au moyen d'une résine hydrophobe formo-phénolique dont la teneur est choisie de façon que la rétention d'eau du produit soit inférieure à 1 % dans le test "BMS".

7. Produit selon la revendication 6, caractérisé en ce que la teneur en liant formo-phénolique soit supérieure à 5 % de la masse de fibres.

8. Produit selon l'une des revendications 5 à 7, comprenant en outre une huile de silicone à raison de 0,5 à 3 % de la masse de fibres.

## Claims

1. Empty-pollution process for petroleum products spread over the surface of water by means of particles of hydrophobic mineral fibre felts dispersed by pneumatic transport on the surface of the water to be treated, characterised in that the associated felts in a mass, the dimensions of which are not greater than 20 cm, are compressed for storage and transport and, at the time of use, after loosening to separate the mass, are submitted to pneumatic transport sufficiently intense to dissociate the mass into tufts of which the dimensions do not exceed about 5 cm, and allowing them to return to their original bulk density.

2. Process according to Claim 1, in which the felt used is, before being compressed, out into pieces not exceeding 4 cm.

3. Process according to any one of the preceding claims, characterised in that the pneumatic transport is effected by a current of gas having a velocity greater than 15 m/s.

4. Process according to any one of the preceding claims, characterised in that the ratio of the mass of the transport gas relative to that of the fibres being transported is at least equal to 1.3.

5. Product based on faults of hydrophobic mineral fibres for carrying out the process according to Claim 1, characterised in that it is constituted by felts cut into pieces not exceeding 4 cm and compressed after cutting substantially to increase its bulk density.

6. Product according to Claim 5, in which the fibres are bound by means of a hydrophobic phenol-formaldehyde resin, the content of which is chosen so that the retention of water product is inferior to 1% in the "BMS" test.

7. Product according to Claim 6, characterised in that the content of phenol-formaldehyde binder is greater than 5% of the mass of the fibres.

8. Product according to any one of Claims 5 to 7, additionally comprising a silicon oil in an amount of 0.5 to 3% of the weight of the fibres.

## Patentansprüche

1. Verfahren zur Beseitigung von umweltverschmutzenden, auf Wasseroberflächen verbreiteten Erdölerzeugnissen mittels Partikeln von hydrophoben Mineralfaserfilzen, welche durch pneumatische Beförderung auf die Oberfläche des zu behandelnden Wassers verstreut sind, dadurch gekennzeichnet, daß die in Knäuel mit einer Größe von nicht mehr als 20 cm zerteilten Filze für ihre Lagerung und ihren Transport verdichtet werden und bei ihrer Verwendung nach einem die Knäuel voneinander trennenden Zerpflücken einer pneumatischen Beförderung unterzogen werden, welche ausreichend stark ist, um die Knäuel in Strähnen mit einer Größe von nicht mehr als ca. 5 cm aufzulösen und es ihnen zu erlauben, ihre ursprüngliche Dichte wieder zu erlangen.

2. Verfahren nach Anspruch 1, bei dem der verwendete Filz vor dem Verdichten in Partikel mit einer Größe von nicht mehr als 4 cm zerschnitten wird.

3. Verfahren nach einem der vorstehenden Ansprüche, dadurch gekennzeichnet, daß die pneumatische Beförderung mittels eines Gasstroms durchgeführt wird, dessen Geschwindigkeit mehr als 15 m/s beträgt.

4. Verfahren nach einem der vorstehenden Ansprüche, dadurch gekennzeichnet, daß das Massenverhältnis des Transportgases zu den beförderten Fasern mindestens gleich 1,3 ist.

5. Produkt auf der Basis von hydrophoben Mineralfaserfilzen für die Durchführung des Verfahrens nach Anspruch 1, dadurch gekennzeichnet, daß es aus Filzen besteht, welche in Partikel mit einer Größe von nicht mehr als 4 cm zerschnitten sind und nach dem Zerschneiden so verdichtet worden sind, daß ihre Dichte erheblich erhöht ist.

6. Produkt nach Anspruch 5, bei dem die Fasern mittels eines hydrophoben Formaldehyd-Phenolharzes gebunden sind, dessen Gehalt so gewählt ist, daß das Wasserrückhaltevermögen des Produktes im "BMS"-Test geringer als 1% ist.

7. Produkt nach Anspruch 6, dadurch gekennzeichnet, daß der Gehalt an Formaldehyd-Phenolharz höher als 5% der Fasermasse ist.

8. Produkt nach einem der Ansprüche 5 bis 7, welches des weiteren ein Silikonöl in einer Menge von 0,5 bis 3% der Fasermasse aufweist.
